# EUROPÄISCHE PATENTSCHRIFT

(11) **EP 3 497 358 B1**
(45) Veröffentlichungstag und Bekanntmachung des Hinweises auf die Patenterteilung: **14.10.2020**
(21) Anmeldenummer: 18753352.6
(22) Anmeldetag: 06.08.2018
(51) Int. Cl.: F16L 37/091

(54) **ANSCHLUSSVORRICHTUNG FÜR ROHRLEITUNGEN MIT LECKAGEANZEIGE**
CONNECTION DEVICE FOR PIPES HAVING A LEAKAGE INDICATOR
DISPOSITIF DE RACCORDEMENT DE CANALISATIONS AVEC INDICATION DE FUITE

(30) Priorität: 11.08.2017 DE 102017118393
(43) Veröffentlichungstag der Anmeldung: 19.06.2019
(73) Patentinhaber: Voss Automotive GmbH, 51688 Wipperfürth (DE)
(72) Erfinder: HAGEN, Harald, 51688 Wipperfürth (DE); KLEHR, Adrian, 58809 Neuenrade (DE); WIEDEI, Max-André, 51647 Gummersbach (DE)
(74) Vertreter: Patent- und Rechtsanwälte Dr. Solf & Zapf
(86) Internationale Anmeldenummer: PCT/EP2018/071224
(87) Internationale Veröffentlichungsnummer: WO 2019/030152

(56) Entgegenhaltungen:
- EP-A1- 0 766 033
- EP-A1- 1 041 332
- DE-A1-102012 108 791
- DE-U1-202012 102 342
- US-A- 4 123 090

## Beschreibung

Die vorliegende Erfindung betrifft eine Anschlussvorrichtung für Rohrleitungen mit einem Anschlusskörper mit einer Aufnahmeöffnung für eine mit einem Leitungsende einzusteckende Rohrleitung und ein innerhalb der Aufnahmeöffnung gelagertes Halteelement zum Fixieren des eingesteckten Leitungsendes gegen Herausziehen, wobei der Anschlusskörper ein axiales zweigeteiltes Gehäuse mit einem ersten, in Einsteckrichtung weisenden Gehäuseteil und einem zweiten, eine Mündungsseite der Aufnahmeöffnung aufweisenden hülsenförmigen Gehäuseteil aufweist, die miteinander verbunden sind, wobei innerhalb des hülsenförmigen Gehäuseteils ein hülsenförmiges Löseelement derart axial verschiebbar gelagert ist, dass durch Einwirken auf das Halteelement die Fixierung der eingesteckten Rohrleitung aufgehoben wird, wobei das Löseelement aus einem umfangsgemäß geschlossenen Ringteil besteht, an dem durch Längsschlitze voneinander getrennte Rastarme ausgebildet sind, wobei das Ringteil an seinem äußeren Umfang mittels einer Umfangsdichtung gegen das zweite hülsenförmige Gehäuseteil und an seinem inneren Umfang im Bereich seiner Ringöffnung mittels einer Umfangsdichtung gegen die eingesteckte Rohrleitung abdichtbar ist.

Eine derartige Anschlussvorrichtung ist aus der EP 2 864 685 A1 bekannt. Bei dieser Anschlussvorrichtung ergibt sich das Problem, dass es zu einem fehlerhaften Einstecken der Rohrleitung kommen kann, wenn die Rohrleitung nicht vollständig eingesteckt ist und somit es zu einem Austritt des in der Rohrleitung fließenden Druckmediums kommt, wodurch das gesamte System ausfallen kann. Diese Gefahr ist bei der gattungsgemäßen Anschlussvorrichtung auch deshalb besonders groß, da die Rohrleitung unmittelbar eingesteckt wird, und nur über die Einsteckkraft letztlich festgestellt werden kann, ob die Rohrleitung bis zum Anschlag eingeführt ist.

Weiterhin ist eine solche gattungsgemäße Anschlussvorrichtung aus der DE 20 2012 102 342 U1 oder aus der DE 10 2012 108791 A1 bekannt. Bei dieser Anschlussvorrichtung wird die Rohrleitung ebenfalls unmittelbar eingesteckt und lediglich über die Einsteckkraft festgestellt, ob die Rohrleitung bis zum Anschlag eingeführt ist. Daher ist die Gefahr groß, dass es zu einem fehlerhaften Einstecken der Rohrleitung kommen kann, da die Rohrleitung nicht vollständig eingesteckt ist und es somit zu einem Austritt des in der Rohrleitung fließenden Druckmediums kommt. Hierdurch kann das gesamte System ausfallen. Der Erfindung liegt die Aufgabe zu Grunde sicherzustellen, dass bestehende Fehlstellungen schon bei einer Inbetriebnahme, z. B. bei einer ersten Druckprüfung schnell aufgefunden werden können.

Erfindungsgemäß wird dies durch die Merkmale des kennzeichnenden Teils des Anspruchs 1 erreicht. Die Erfindung basiert demnach auf der Erkenntnis, dass es möglich ist, einen Leckagespalt im Falle eines im Innenraum entstehenden Überdrucks dadurch im Bereich der Dichtung zu erzeugen, dass der entstehende Druck ausreicht, um die Dichtung selbst aus ihrer Dichtstellung abzuheben. Im Bereich, in dem die Dichtung abgehoben wird, entsteht dann ein Leckagespalt, aus dem das Druckmedium, insbesondere Druckluft, nach außen austreten kann und ein Zischgeräusch entsteht. Durch Wahrnehmung des Zischgeräusches kann der Anwender dann feststellen, dass die Anschlussvorrichtung nicht vollständig gesteckt ist. Sobald der erhöhte Druck im Innern der Anschlussvorrichtung nicht mehr besteht, nimmt die Dichtung ihre übliche Dichtfunktion nach außen wieder auf, so dass von außen nach innen insbesondere keine Verunreinigung in den Innenraum eintreten kann.

Eine vorteilhafte Weiterbildung der Erfindung besteht darin, dass der Leckagespalt von mindestens einer Einkerbung gebildet wird, die in axialer Richtung entgegen der Einsteckrichtung verläuft, wobei die Einkerbung über einen Teilabschnitt des Dichtbereiches der äußeren Umfangsdichtung sich erstreckt und in einem Abschnitt der inneren Umfangswand in Einsteckrichtung gesehen hinter dem Dichtbereich beginnt. Durch diese erfindungsgemäße Ausgestaltung wird das sich im Innenraum befindliche Druckmedium bis in den Dichtbereich hinein geführt, wodurch das Abheben der Dichtung begünstigt wird.

Weiterhin ist es von Vorteil, wenn die äußere Umfangsdichtung im Längsschnitt gesehen aus einem kreisförmigen Ringkörper besteht, an dem einseitig an seiner entgegen der Einsteckrichtung weisenden Seite oberhalb seiner Mittellinie M-M eine in Längsschnitt gesehen dreieckförmige Dichtlippe umfangsgemäß ausgebildet ist, wobei eine Gerade durch die Spitze der Dichtlippe und den Mittelpunkt M1 des Grundkörpers einen spitzen Winkel mit der Mittellinie M-M einschließt. Hierbei liegt die Dichtlippe vorzugsweise an einer sich in Einsteckrichtung konisch verengenden Gegenfläche an deren inneren Umfang derart an und wird elastisch derart verformt, dass einerseits eine umfangsgemäße Abdichtung gewährleistet ist, und andererseits durch den im Innern aufgebauten Innendruck des Druckmediums im nicht vollständig eingesteckten Zustand der Rohrleitung der Leckagespalt sich durch ein Abheben der Dichtlippe ausbildet. Durch die Ausbildung der Dichtlippe wird die radiale Verformbarkeit der Umfangsdichtung verbessert. Erfindungsgemäß ist es weiterhin von Vorteil, wenn die Umfangsdichtung in einer Ringnut des Ringteils angeordnet ist, wobei insbesondere die radiale Höhe der in Einsteckrichtung gesehen hinteren Nutwand kleiner ist, als die radiale Höhe der in Einsteckrichtung gesehen vorderen Nutwand, Insbesondere kann die radiale Höhe der hinteren Nutwand derart bemessen sein, dass die Nutwand an der dreieckförmigen Dichtlippe endet. Weiterhin kann es vorteilhaft sein, wenn die Einkerbung entgegen der Einsteckrichtung gesehen sich bis in den Anlagebereich der Dichtlippe erstreckt, wobei die Tiefe der Einkerbung in Richtung auf die Dichtlippe sich verringert. Durch die Verengung des Innenraums der Einkerbung entgegen der Einsteckrichtung erfolgt eine Druckerhöhung, so dass das Abheben der Dichtlippe hierdurch unterstützt wird.

Vorteilhafte Ausführungen der Erfindung sind in den Unteransprüchen enthalten und werden in Verbindung mit der Erfindung anhand den beiliegenden Zeichnungen näher erläutert. Es zeigen:
- Fig. 1: einen Längsschnitt durch eine erste Ausführungsform einer erfindungsgemäßen Anschlussvorrichtung mit voll eingesteckter Rohrleitung,
- Fig. 1.1: eine Einzelheit bei Z in Fig. 1,
- Fig. 1a: einen Längsschnitt durch die Ausführungsform gemäß Fig. 1 mit nicht voll eingesteckter Rohrleitung,
- Fig. 2: einen Längsschnitt durch eine äußere Umfangsdichtung bei der Ausführungsform gemäß Fig. 1,
- Fig. 3: eine perspektivische Ansicht eines zweiten äußeren Gehäuseteils gemäß Fig. 1,
- Fig. 4: eine vergrößerte Darstellung der Einzelheit IV in Fig. 1a und
- Fig. 5: eine vergrößerte Darstellung der Einzelheit V in Fig. 4.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

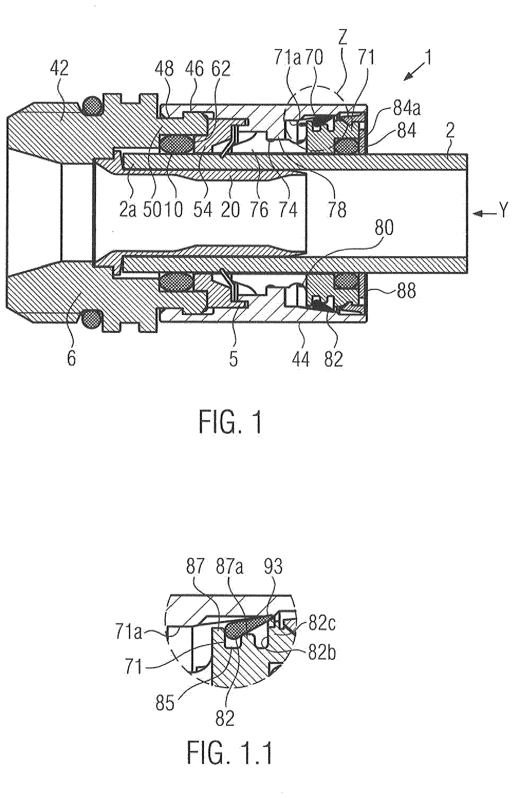

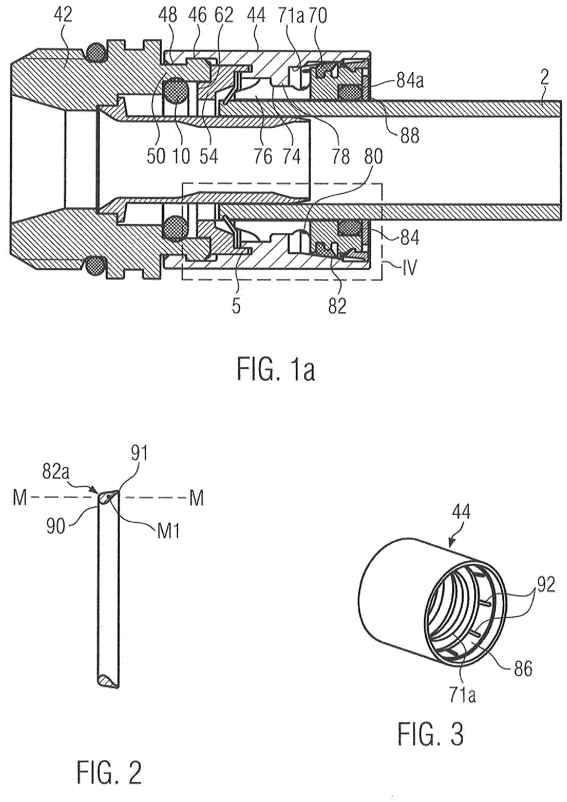

Gemäß Fig. 1 dient eine erfindungsgemäße Anschlussvorrichtung 1 zum schnellen und auch lösbaren Anschluss einer Rohrleitung 2 durch einfaches Einstecken eines Leitungsendes 2a in eine Aufnahmeöffnung eines Anschlusskörpers 6. Die Einsteckrichtung ist in Fig. 1 und 2 jeweils mit einem Pfeil veranschaulicht. Da somit kein Anschlussdorn zum Aufstecken der Rohrleitung 2 vorhanden ist, kann auch von einem "Dornlos-Stecksystem" gesprochen werden. Zum Arretieren des eingesteckten Leitungsendes 2a gegen Herausziehen ist innerhalb der Aufnahmeöffnung ein Halteelement 5 gelagert, welches insbesondere als federelastischer Zahnring mit einem äußeren Umfangsbereich 8 und mit mehreren über den Umfang verteilt angeordneten, sich radial nach innen und schräg in Einsteckrichtung Y geneigt erstreckenden und dadurch widerhakenartig kraft- und/oder formschlüssig gegen die äußere Umfangsfläche des Leitungsendes 2a wirkenden Haltezähnen ausgebildet ist. Zur Abdichtung der eingesteckten Rohrleitung 2 nach außen ist zudem innerhalb des Anschlusskörpers 6 mindestens eine Umfangsdichtung 10 gelagert, die einen radial zwischen dem Leitungsende 2a und dem Anschlusskörper 6 gebildeten Ringspalt nach außen abdichtet.

Der äußere Umfangsbereich 8 des Halterings 5 liegt im unverformten Zustand in einer zur Längsachse X-X der Anschlussvorrichtung 1 senkrechten Ebene, während die Haltezähne gemeinsam durch ihre Schrägstellung auf einem Konus liegen. Die Haltezähne definieren mit ihren inneren Haltekanten einen Umkreis, dessen Durchmesser im unverformten Zustand kleiner als der Außendurchmesser der Rohrleitung 2 ist. Dadurch wirken die Haltekanten mit einer radialen Haltekraft insbesondere formschlüssig oder zumindest kraftformschlüssig gegen den Außenumfang des eingesteckten Leitungsendes 2a.

Der Haltering 5 ist insbesondere mit seinem äußeren Umfangsbereich 8 mit einem definiert begrenzten axialen Bewegungsspiel innerhalb des Anschlusskörpers 6 gelagert. Dieses axiale Bewegungsspiel wird durch beidseitige, axial gegenüberliegende Anlageabschnitte innerhalb des Anschlusskörpers 6 begrenzt. Weiterhin wirkt der Haltering 5 am winkligen Übergang zwischen dem äußeren Umfangsbereich 8 und den Haltezähnen derart mit einer innerhalb des Anschlusskörpers 6 am radial inneren Umfang der den ersten Anlageabschnitt bildenden radialen Anlagefläche vorgesehenen, umfangsgemäßen Kippkante zusammen, dass beim Einstecken des Leitungsendes 2a durch dessen Anlage an den Haltezähnen der Haltering 5 aus einer mit seinem äußeren Umfangsbereich 8 gegen den ersten, unteren Anlageabschnitt gedrückt wird und wippenartig um die Kippkante verschwenkt wird, bis der äußere Umfangsbereich 8 radial außenseitig zur abgestützten Anlage an dem zweiten, axial gegenüberliegenden oberen Anlageabschnitt gelangt. Wenn ausgehend von dieser Stellung das Leitungsende 2a weiter in Einsteckrichtung Y bewegt wird, erfolgt eine elastische Biegeverformung im Wesentlichen nur noch im Bereich der die Kippkante radial nach innen überragenden Haltezähne. Der Einsteckvorgang wird dann abgeschlossen, indem das Leitungsende 2a etwas gegen die Einsteckrichtung Y zurückgezogen wird. Dadurch schneiden sich die Haltezähne formschlüssig oder zumindest kraftformschlüssig in den Außenumfang des Leitungsendes 2a ein.

Vorteilhafterweise ist innerhalb der Aufnahmeöffnung des Anschlusskörpers 6 eine Stützhülse 20 derart koaxial angeordnet, dass das Leitungsende 2a beim Einstecken auf eine zylindrische Außenfläche der Stützhülse 20 aufschiebbar ist. Dadurch wird das eingesteckte Leitungsende 2a von der Stützhülse 20 radial abgestützt, so dass bei Beaufschlagung mit einer von dem Haltering 5 bewirkten radialen Haltekraft Verformungen der Rohrleitung 2 im Wirkbereich des Halterings 5 vermieden werden.

Bei der erfindungsgemäßen Anschlussvorrichtung 1 ist vorgesehen, dass der Anschlusskörper 6 ein axial zweigeteiltes Gehäuse mit einem ersten, stutzenartigen, in Einsteckrichtung weisenden Gehäuseteil 42 und einem zweiten, eine Mündungsseite der Aufnahmeöffnung bildenden, hülsenförmigen Gehäuseteil 44 aufweist. Diese beiden Gehäuseteile 42, 44 sind miteinander verbunden bevorzugt über eine umfangsgemäß geschlossene Rastverbindung 46. In der dargestellten, bevorzugten Ausführung greift dazu das erste Gehäuseteil 42 mit einem Steckabschnitt 48 axial und radial formschlüssig in eine innere, nutartige Rastausnehmung 50 des zweiten Gehäuseteils 44 ein. Insbesondere wirken hierbei die Gehäuseteile 42, 44 auch zum Beispiel bereichsweise mit Press-Sitz zusammen, um eine Spaltabdichtung insbesondere als Schmutzdichtung zu gewährleisten. Das erste Gehäuseteil 42 kann als Einschraubstutzen mit einem Außengewindeansatz ausgebildet sein.

Die oben beschriebene Kippkante für den Haltering 5 kann mit Vorteil an einem Einsatzring 54 gebildet sein, der bevorzugt auch den ersten Anlageabschnitt in Form einer radial nach außen an die Kippkante angrenzenden, zur Längsachse X-X senkrechten Stirnfläche aufweist. Die Kippkante ist somit am Übergang zwischen der den ersten Anlageabschnitt bildenden Stirnfläche und einer innen angrenzenden Konusfläche gebildet.

Der Einsatzring 54 wird insbesondere mit Press-Sitz in den Anschlusskörper 6, und zwar bevorzugt in dessen erstes Gehäuseteil 42 eingesetzt. Hierbei ist insbesondere vorgesehen, dass der Einsatzring 54 innerhalb des Anschlusskörpers 6 mit einer in Einsteckrichtung weisenden Stirnfläche gemeinsam mit einer dieser axial gegenüberliegenden Flankenfläche des Anschlusskörpers 6 bzw. des ersten Gehäuseteils 42 eine Dichtungskammer 62 für die Rohr-Umfangssdichtung 10 begrenzt. Bei der Umfangsdichtung 10 handelt es sich bevorzugt um einen O-Ring, der für eine Anwendung bei Druckluft-Rohrleitungen vorzugsweise aus EPDM (Ethylen-Propylen-Dien-Monomer) oder NBR (Nitrile Butadiene Rubber = Nitril Katuschuk) besteht und für eine Anwendung bei Kraftstoff-Rohrleitungen aus einem FluorElastomer.

Der Einsatzring 54 entkoppelt vorteilhafterweise die Bauräume für das Halteelement 5 einerseits und das Dichtelement 10 andererseits. Insbesondere in Kombination mit der Stützhülse 20 werden Exzentrizitäten und Ovalitäten der Rohrleitung 2 im Bereich zwischen Dichten und Halten vermieden bzw. kompensiert. Bevorzugt besteht der Einsatzring 54 aus einem Kunststoff, insbesondere POM ohne Glasfaserverstärkung, PBToder PA6.6, gegebenenfalls mit Glasfaser-Anteil GF30 %. Alternativ kann der Einsatzring 54 auch aus Metall, insbesondere Aluminium bestehen.

Für eine Lösbarkeit der eingesteckten und über den Haltering 5 fixierten Rohrleitung 2 ist ein hülsenförmiges Löseelement 70 vorgesehen. Dieses Löseelement 70 greift derart axial verschiebbar in den Anschlusskörper 6 ein, dass durch Einschieben des Löseelementes 70 in Einsteckrichtung Y der Haltering 5 zur Freigabe des Leitungsendes 2a im Bereich der Haltezähne elastisch verformbar ist. Dazu wirkt das Löseelement 70 mit Betätigungsabschnitten 72 gegen den Haltering 5, zum Beispiel gegen die Haltezähne.

Das Löseelement 70 ist bevorzugt innerhalb des Anschlusskörpers 6 über eine Verrastung 74 gegen Demontage gehalten. Dazu weist das Löseelement 70 an seinem in Einsteckrichtung Y weisenden Ende durch axiale Schlitze beabstandete Rastarme 76 auf, die einendig an einem umfangsgemäß geschlossenen Ringteil 71 angeformt sind, und die mit radial nach außen weisenden Rastnasen eine radiale Stufenfläche 78 (siehe Fig. 1) innerhalb des Anschlusskörpers 6 hintergreifen, wobei diese Stufenfläche 78 an dem zweiten hülsenförmigen Gehäuseteil 44 gebildet ist. In weiterer vorteilhafter Ausgestaltung sind die Rastarme 76 mit dem umfangsgemäß geschlossenen Ringteil 71 des Löseelementes 70 über scharnierartige Einschnürungen 80 verbunden, wodurch die radiale Beweglichkeit der Rastarme 76 begünstigt wird.

Weiterhin weist das Löseelement 70 im Bereich des Ringteils 71 einerseits eine äußere Umfangsdichtung 82 und andererseits eine innere Umfangsdichtung 84 auf. Die äußere Umfangsdichtung 82 dient zur Abdichtung eines Ringspaltes zwischen dem Ringteil 71 des hülsenförmigen Löseelementes 70 und dem Anschlusskörper 6 bzw. dessen zweitem Gehäuseteil 44. Die innere Umfangsdichtung 84 dichtet einen Ringspalt zwischen dem Ringteil 71 und dem Leitungsende 2a ab. Außerdem fungiert in bevorzugter Ausgestaltung die äußere Umfangsdichtung 82 auch als Federelement zur Erzeugung einer axialen Rückstellkraft für das Löseelement 70. Dazu wirkt die Umfangsdichtung 82 gegen eine innere, sich insbesondere konisch verengende Gegenfläche 86 innerhalb des Anschlusskörpers 6 bzw. des zweiten Gehäuseteils 44. Vorteilhafterweise ist ein ringscheibenförmiges, deckelartiges Verschlusselement 88 zum Verschließen einer endseitig verbleibenden, die eingesteckte Rohrleitung 2 umschließenden ringförmigen Öffnung vorgesehen. Gemäß Fig. 1 verschließt dieses Verschlusselement 88 auch eine Aufnahmeausnehmung 84a für die innere Umfangsdichtung 84. Zudem kann das Verschlusselement 88 mit dem nicht dargestellten, axial nach außen vorstehenden Löseelement 70 über eine Rastverbindung verbunden sein.

In Fig. 1 ist eine Ausführungsform einer erfindungsgemäßen Anschlussvorrichtung 1 dargestellt. Bei dieser Ausführungsform ist die äußere Umfangsdichtung 82 als elastisch verformbarer Dichtring 82a, siehe Fig. 2, ausgebildet und in einer Ringnut 85 aufgenommen. Die Ringnut 85 weist eine in Einsteckrichtung Y gesehen vordere, sich radial erstreckende Nutwand 87 und eine hierzu parallele hintere Nutwand 87a auf. Dieser Dichtring 82a ist nicht vollständig gekammert, siehe Fig. 2, so dass er sich in axialer Richtung entgegen der Einsteckrichtung Y verformen kann, wobei die vordere Nutwand 87 eine größere radiale Höhe besitzt als die hintere Nutwand 87a. Insbesondere weist der Dichtring 82a einen in Längsschnitt gemäß der Längsachse X-X gesehen kreisförmigen Ringkörper 90 auf, siehe Fig. 2, an dem eine einseitige, sich entgegen der Einsteckrichtung Y erstreckende, im Längsschnitt gesehen zum Beispiel dreieckförmige Dichtlippe 91 umfangsgemäß oberhalb seiner Mittelachse M-M ausgebildet ist. Hierbei verläuft eine Gerade durch die Spitze der Dichtlippe 91 und einen Mittelpunkt M1 des kreisförmigen Ringkörpers 90 unter einem spitzen Winkel zur Mittellinie M-M. Dieser spitze Winkel ist vorzugsweise 60°. Die radiale Höhe der hinteren Nutwand 87a ist zum Beispiel der Art, dass die Nutwand 87a an der dreieckförmigen Dichtlippe 91 endet.

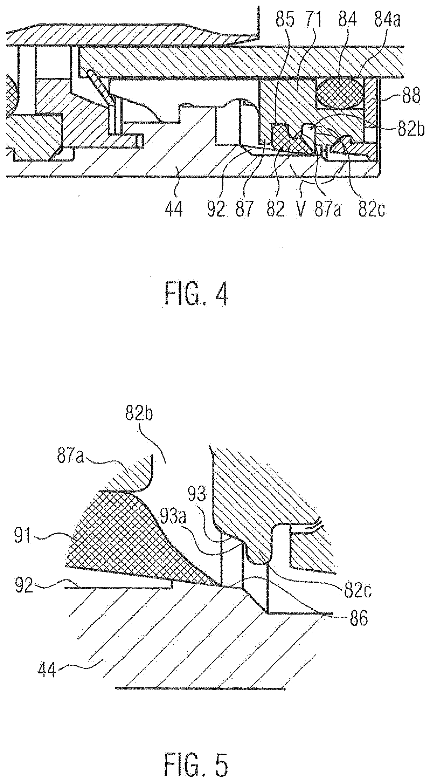

Die hintere Nutwand 87a wirkt als Kompressionsteil für den Ringkörper 90 der Umfangsdichtung 82, wodurch die Vorspannung erzeugt wird, und durch die Kompression der zwischen der vorderen Nutwand 87 und der hinteren Nutwand 87a ausgebildeten ersten Kammer der Ringnut 85, wie in Fig. 1 dargestellt, wird diese vollständig vom Material des Dichtrings 82a ausgefüllt, wobei jedoch zum Beispiel eventuell vorhandene Eckbereiche der Nut auch nicht ausgefüllt sein können. Entgegen der Einsteckrichtung Y ist hinter der hinteren Nutwand 87a eine zweite Kammer 82b zwischen der Nutwand 87a und einer hinteren Kammerwand 82c angeordnet. Diese hintere Kammerwand 82c besitzt eine größere radiale Höhe als die vordere Nutwand 87. Diese zweite Kammer 82b nimmt im eingeschobenen Zustand des Löseelementes 70 Material der Umfangsdichtung 82 auf und schafft Freiraum für eine radiale Bewegung der Dichtlippe 91, die im eingesteckten Zustand des Löseelementes 70 in axialer Richtung in Richtung auf die hintere Kammerwand 82c verpresst ist und der Abdichtung dient. Die hintere Kammerwand 82c weist an ihrer der hinteren Nutwand 87a zugekehrten Seite vor ihrem radial äußeren Wandende einen Absatz 93 auf, der eine in Richtung auf die hintere Nutwand 87a abgeschrägte Absatzfläche 93a besitzt. Hierdurch wird der notwendige axiale Verschiebeweg des Löseelementes 70 in der Löseposition geschaffen, ohne die Dichtlippe 91 abzuscheren, siehe insbesondere Fig. 5.

Wie in Fig. 1a, 3, 4 und 5 gezeigt ist, ist im Dichtungsbereich der Umfangsdichtung 82 insbesondere im inneren Umfangsbereich des zweiten Gehäuseteils 44 mindestens eine sich axial in Richtung der Längsachse X-X, d. h. in Längsrichtung, entgegen der Einsteckrichtung Y erstreckende Einkerbung 92 ausgebildet, wobei vorteilhafterweise die Tiefe der Einkerbung 92 entgegen der Einsteckrichtung Y abnimmt, und zwar aufgrund der in Einsteckrichtung Y sich konisch verengenden umfangsgemäßen Gegenfläche 86, die in der inneren Umfangswand 71a des zweiten Gehäuseteils 44 ausgebildet ist. Die Einkerbung 92 bzw. die Einkerbungen 92 ist/sind vorzugsweise im Bereich der Gegenfläche 86 angeordnet. Wie in Fig. 3 dargestellt, sind die Einkerbungen 92 jeweils umfangsgemäß mit gleichen Abständen parallel zueinander angeordnet. Hierdurch wird die Ausbildung eines Leckagespaltes begünstigt, insbesondere da sich durch die entgegen der Einsteckrichtung Y verengenden Ausbildung der Einkerbungen 92 im Bereich der Dichtlippe 91 ein Druckanstieg verursacht wird. Der Dichtring 82a ist mit seinem Ringkörper 90 und seiner Dichtlippe 91 derart dimensioniert und materialmäßig ausgebildet, dass einerseits die Dichtfunktion im voll eingesteckten Zustand gegeben ist und andererseits ebenfalls insbesondere eine Rückstellfunktion, die durch eine entgegen der Einsteckrichtung Y wirkende Rückstellkraft gewährleistet wird. Hierbei erstreckt sich die Dichtlippe 91 mit ihrem entgegen der Einsteckrichtung Y weisenden Ende über die Einkerbung 92 hinaus, siehe Fig. 5.

In der in Fig. 1a gezeigten Einsteckstellung der Rohrleitung 2, in der in das Innere des Anschlusskörpers 6 aus der Rohrleitung 2 Druckmedium eintritt, strömt dieses Druckmedium durch den Dichtspalt zwischen dem zweiten Gehäuseteil 44 und dem Ringteil 71 und somit in die Einkerbung 92 bzw. die Einkerbungen 92, sofern mehrere Einkerbungen am Umfang ausgebildet sind. Dabei wird durch den Strömungsdruck des Druckmediums die Dichtlippe 91 im Bereich ihrer Lippenspitze abgehoben und es entsteht ein Leckagespalt oder mehrere Leckagespalte zwischen der Lippenspitze und der inneren Umfangswand 71a des zweiten Gehäuseteils 44 bzw. deren Gegenfläche 86 des Ringteils 71. Dabei entsteht ein Zischgeräusch durch das austretende Druckmedium und somit ein hörbares Signal dafür, dass die Rohrleitung 2 nicht vollständig eingesteckt ist. Gemäß der Erfindung ist die Ausbildung einer oder mehrerer Einkerbungen 92 in der inneren Umfangswand 71a bzw. deren Gegenfläche 86 des Ringteils 71 zweckmäßig, jedoch nicht notwendig. Denn auch ohne deren Vorhandensein kann durch die Dimensionierung der Umfangsdichtung 82 und der zugehörigen Ringnut 85 das Abheben der Dichtlippe 91 aufgrund des Druckmediums erreicht werden.

### Bezugszeichenliste

- 1: Anschlussvorrichtung
- 2: Rohrleitung
- 2a: Leitungsende
- 5: Halteelement
- 6: Anschlusskörper
- 10: Umfangsdichtung
- 20: Stützhülse
- 42: Erstes Gehäuseteil
- 44: Zweites Gehäuseteil
- 46: Rastverbindung
- 48: Steckabschnitt
- 50: Rastausnehmung
- 54: Einsatzring
- 62: Dichtungskammer
- 70: Löseelement
- 71: Ringteil
- 71a: Innere Umfangswandung
- 72: Betätigungsabschnitt
- 74: Verrastung
- 76: Rastarme
- 78: Stufenfläche
- 80: Einschnürungen
- 82: Äußere Umfangsdichtung
- 82a: Dichtring
- 82b: Zweite Kammer
- 82c: Hintere Kammerwand
- 84: Innere Umfangsdichtung
- 84a: Innere Ausnehmung
- 85: Ringnut
- 86: Gegenfläche
- 87: Vordere Nutwand
- 87a: Hintere Nutwand
- 88: Verschlusselement
- 90: Ringkörper
- 91: Dichtlippe
- 92: Einkerbung
- 93: Absatz
- 93a: Absatzfläche

- M1: Mittelpunkt
- M-M: Mittelachse
- X-X: Längsachse
- Y: Einsteckrichtung

## Patentansprüche

1. Anschlussvorrichtung (1) für Rohrleitungen (2) mit einem Anschlusskörper (6) mit einer Aufnahmeöffnung für eine mit einem Leitungsende (2a) einzusteckende Rohrleitung (2) und ein innerhalb der Aufnahmeöffnung gelagertes Halteelement (5) zum Fixieren des eingesteckten Leitungsendes (2a) gegen Herausziehen, wobei der Anschlusskörper (6) ein axiales zweigeteiltes Gehäuse mit einem ersten, in Einsteckrichtung weisenden Gehäuseteil (42) und einem zweiten, eine Mündungsseite der Aufnahmeöffnung aufweisenden hülsenförmigen Gehäuseteil (44) aufweist, die miteinander verbunden sind, wobei innerhalb des hülsenförmigen Gehäuseteils (44) ein hülsenförmiges Löseelement (70) derart axial verschiebbar gelagert ist, dass durch Einwirken auf das Halteelement (5) die Fixierung der eingesteckten Rohrleitung (2) aufgehoben wird, wobei das Löseelement (70) aus einem umfangsgemäß geschlossenen Ringteil (71) besteht, an dem durch Längsschlitze voneinander getrennte Rastarme ausgebildet sind, wobei das Ringteil (71) an seinem äußeren Umfang mittels einer Umfangsdichtung (82) gegen das zweite hülsenförmige Gehäuseteil (44) und an seinem inneren Umfang im Bereich seiner Ringöffnung mittels einer Umfangsdichtung (84) gegen die eingesteckte Rohrleitung (2) abdichtbar ist,
**dadurch gekennzeichnet, dass** im montierten Zustand der Anschlussvorrichtung (1) im äußeren Umfangsbereich des Ringteils (71) des Löseelementes (70) die äußere Umfangsdichtung (82) derart verformbar aus ihrer Dichtungslage ist, dass zwischen der äußeren Umfangsdichtung (82) und der gegenüberliegenden inneren Umfangswand (71a) des zweiten Gehäuseteils (44) mindestens ein Leckagespalt durch einen im Innern der Anschlussvorrichtung (1) vorhandenen Innendruck des in der Rohrleitung (2) strömenden Druckmediums ausgebildet wird.

2. Anschlussvorrichtung nach Anspruch 1,
**dadurch gekennzeichnet, dass** der Leckagespalt von mindestens einer Einkerbung (92) in einer inneren Umfangswand (71a) des zweiten Gehäuseteils (44) gebildet wird, die in axialer Richtung entgegen der Einsteckrichtung Y verläuft, wobei die Einkerbung (92) über einen Teilabschnitt des Dichtbereiches der äußeren Umfangsdichtung (82) verläuft und in einem Abschnitt der inneren Umfangswand in Einsteckrichtung Y gesehen hinter dem Dichtbereich beginnt.

3. Anschlussvorrichtung nach Anspruch 1 oder 2,
**dadurch gekennzeichnet, dass** die äußere Umfangsdichtung (82) im Längsschnitt gesehen aus einem kreisförmigen Ringkörper (90) besteht, an dem einseitig an seiner entgegen der Einsteckrichtung Y weisenden Seite oberhalb seiner Mittellinie M-M eine im Längsschnitt gesehen dreieckförmige Dichtlippe (91) umfangsgemäß ausgebildet ist, wobei eine Gerade durch die Spitze der Dichtlippe (91) und dem Mittelpunkt M1 des Grundkörpers einen spitzen Winkel mit der Mittellinie M-M einschließt.

4. Anschlussvorrichtung nach Anspruch 3,
**dadurch gekennzeichnet, dass** die Dichtlippe (91) durch eine sich in Einsteckrichtung Y konisch verengende Gegenfläche (86) der inneren Umfangswand (71a) des zweiten Gehäuseteils (44) derart elastisch verformt ist, dass eine umfangsgemäße Abdichtung gewährleistet ist und durch den im Innern vorhandenen Innendruck des Druckmediums bei nicht vollständig eingesteckter Rohrleitung (2) der Leckagespalt durch ein Abheben der Dichtlippe (91) sich ausbildet.

5. Anschlussvorrichtung nach Anspruch 4,
**dadurch gekennzeichnet, dass** eine Einkerbung (92) oder Einkerbungen (92) entgegen der Einsteckrichtung Y gesehen sich innerhalb der inneren Umfangswand (71a) bzw. in der sich konisch verjüngenden Gegenfläche (86) bis in den Anlagebereich der Dichtlippe (91) erstreckt bzw. erstrecken, wobei die Tiefe der Einkerbung (92) in Richtung auf die Dichtlippe (91) sich verringert.

6. Anschlussvorrichtung nach einem der Ansprüche 1 bis 5,
**dadurch gekennzeichnet, dass** die äußere Umfangsdichtung (82) in einer Ringnut (85) des Ringteils (71) angeordnet ist, wobei in Einsteckrichtung Y gesehen die radiale Höhe ihrer hinteren Nutwand (87a) kleiner ist als die radiale Höhe ihrer vorderen Nutwand (87).

7. Anschlussvorrichtung nach Anspruch 6,
**dadurch gekennzeichnet, dass** die radiale Höhe der hinteren Nutwand (87a) derart bemessen ist, dass die Nutwand (87a) an der dreieckförmigen Dichtlippe (91) endet.

8. Anschlussvorrichtung nach Anspruch 6 oder 7,
**dadurch gekennzeichnet, dass** hinter der hinteren Nutwand (87a) eine zweite Kammer (82b) zwischen der hinteren Nutwand (87a) und einer hinteren Kammerwand (82c) angeordnet ist, wobei die Kammerwand (82c) eine größere radiale Höhe als die vordere Nutwand (87) aufweist.

9. Anschlussvorrichtung nach Anspruch 8,
**dadurch gekennzeichnet, dass** die hintere Kammerwand (82c) an ihrer der hinteren Nutwand (87a) zugekehrten Seite vor ihrem radialen äußeren Wandende einen Absatz (93) aufweist, der eine in Richtung auf die hintere Nutwand (87a) abgeschrägte Absatzfläche (93a) besitzt.

## Claims

1. Connection device (1) for pipelines (2), having a connection body (6) with an accommodating opening for a pipeline (2), which is to be inserted by way of one line end (2a), and a retaining element (5), which is mounted within the accommodating opening and is intended for fixing the inserted line end (2a) against being pulled out, wherein the connection body (6) has an axial two-part housing with a first housing part (42), which is oriented in the insertion direction, and a second, sleeve-form housing part (44), which has a mouth-opening side of the accommodating opening, said two housing parts being connected to one another, wherein a sleeve-form release element (70) is mounted in an axially displaceable manner within the sleeve-form housing part (44) such that action on the retaining element (5) disengages the fixing of the inserted pipeline (2), wherein the release element (70) comprises a circumferentially closed annular part (71), on which are formed latching arms which are separated from one another by longitudinal slits, wherein the annular part (71) can be sealed on its outer circumference, by means of a circumferential seal (82), against the second, sleeve-form housing part (44) and can be sealed at its inner circumference in the region of its annular opening, by means of a circumferential seal (84), against the inserted pipeline (2),
**characterized in that** in the fitted state of the connection device (1), in the outer circumferential region of the annular part (71) of the release element (70), the outer circumferential seal (82) can be deformed out of its sealing position such that, between the outer circumferential seal (82) and the opposite inner circumferential wall (71a) of the second housing part (44), at least one leakage gap is formed by internal pressure, which is present in the interior of the connection device (1), of the pressure medium flowing in the pipeline (2).

2. Connection device according to Claim 1,
**characterized in that** the leakage gap is formed by at least one indentation (92) in an inner circumferential wall (71a) of the second housing part (44), said indentation running axially counter to the insertion direction Y, wherein the indentation (92) runs over a sub-portion of the sealing region of the outer circumferential seal (82) and, in a portion of the inner circumferential wall, begins behind the sealing region, as seen in the insertion direction Y.

3. Connection device according to Claim 1 or 2, **characterized in that** the outer circumferential seal (82), as seen in longitudinal section, comprises a circular annular body (90), on one side of which - this being the side oriented counter to the insertion direction Y - a triangular sealing lip (91), as seen in longitudinal section, is formed circumferentially above the centre line M-M, wherein a straight line through the tip of the sealing lip (91) and the centre point M1 of the main body encloses an acute angle with the centre line M-M.

4. Connection device according to Claim 3,
**characterized in that** a mating surface (86) of the inner circumferential wall (71a) of the second housing part (44), said mating surface tapering conically in the insertion direction Y, deforms the sealing lip (91) elastically such that circumferential sealing is ensured and as a result of the internal pressure of the pressure medium present in the interior, when the pipeline (2) is not fully inserted, the leakage gap forms as a result of the sealing lip (91) lifting up.

5. Connection device according to Claim 4,
**characterized in that** an indentation (92) or indentations (92) extends or extend, as seen counter to the insertion direction Y, within the inner circumferential wall (71a), or in the conically tapering mating surface (86), into the abutment region of the sealing lip (91), wherein the depth of the indentation (92) decreases in the direction of the sealing lip (91).

6. Connection device according to one of Claims 1 to 5,
**characterized in that** the outer circumferential seal (82) is arranged in an annular groove (85) of the annular part (71), wherein the radial height of the rear groove wall (87a) is smaller than the radial height of the front groove wall (87), as seen in the insertion direction Y.

7. Connection device according to Claim 6,
**characterized in that** the radial height of the rear groove wall (87a) is dimensioned such that the groove wall (87a) terminates at the triangular sealing lip (91).

8. Connection device according to Claim 6 or 7,
**characterized in that,** behind the rear groove wall (87a), a second chamber (82b) is arranged between the rear groove wall (87a) and a rear chamber wall (82c), wherein the chamber wall (82c) has a greater radial height than the front groove wall (87).

9. Connection device according to Claim 8,
**characterized in that,** on its side which is directed towards the rear groove wall (87a), the rear chamber wall (82c) has, in front of its radial outer wall end, a shoulder (93), which has a shoulder surface (93a) which slopes in the direction of the rear groove wall (87a).

## Revendications

1. Dispositif de raccordement (1) pour des canalisations (2), comprenant un corps de raccordement (6) muni d'une ouverture de réception pour une canalisation (2) à insérer par une extrémité de canalisation (2a) et un élément de retenue (5) monté à l'intérieur de l'ouverture de réception pour la fixation de l'extrémité de canalisation insérée (2a) contre un retrait, le corps de raccordement (6) comprenant un boîtier axial en deux parties comprenant une première partie de boîtier (42) orientée dans la direction d'insertion et une deuxième partie de boîtier (44) en forme de manchon comprenant un côté embouchure de l'ouverture de réception, qui sont reliées l'une à l'autre, un élément de libération (70) en forme de manchon étant monté en coulissement axial à l'intérieur de la partie de boîtier (44) en forme de manchon de manière à supprimer la fixation de la canalisation insérée (2) en agissant sur l'élément de retenue (5), l'élément de libération (70) étant constitué par une partie annulaire (71) fermée en périphérie, sur laquelle des bras d'encliquetage séparés les uns des autres par des fentes longitudinales sont formés, la partie annulaire (71) pouvant être étanchéifiée au niveau de sa périphérie extérieure vis-à-vis de la deuxième partie de boîtier (44) en forme de manchon au moyen d'un joint d'étanchéité périphérique (82) et au niveau de sa périphérie intérieure dans la zone de son ouverture annulaire vis-à-vis de la canalisation insérée (2) au moyen d'un joint d'étanchéité périphérique (84), **caractérisé en ce qu'à** l'état monté du dispositif de raccordement (1), dans la zone périphérique extérieure de la partie annulaire (71) de l'élément de libération (70), le joint d'étanchéité périphérique extérieur (82) est déformable depuis sa position d'étanchéité de telle sorte que, entre le joint d'étanchéité périphérique extérieur (82) et la paroi périphérique intérieure opposée (71a) de la deuxième partie de boîtier (44), au moins un intervalle de fuite soit formé par une pression interne, régnant à l'intérieur du dispositif de raccordement (1), du milieu sous pression s'écoulant dans la canalisation (2).

2. Dispositif de raccordement selon la revendication 1, **caractérisé en ce que** l'intervalle de fuite est formé par au moins une rainure (92) dans une paroi périphérique intérieure (71a) de la deuxième partie de boîtier (44), qui s'étend dans la direction axiale à l'encontre de la direction d'insertion Y, la rainure (92) s'étendant sur une section partielle de la zone d'étanchéité du joint d'étanchéité périphérique extérieur (82) et débutant dans une section de la paroi périphérique intérieure après la zone d'étanchéité dans la direction d'insertion Y.

3. Dispositif de raccordement selon la revendication 1 ou 2, **caractérisé en ce que** le joint d'étanchéité périphérique extérieur (82), dans la coupe longitudinale, est constitué par un corps annulaire circulaire (90), sur lequel une lèvre d'étanchéité (91) triangulaire dans la coupe longitudinale est formée en périphérie d'un côté sur son côté orienté à l'encontre de la direction d'insertion Y, au-dessus de sa ligne médiane M-M, une droite passant par la pointe de la lèvre d'étanchéité (91) et le point médian M1 du corps de base formant un angle aigu avec la ligne médiane M-M.

4. Dispositif de raccordement selon la revendication 3, **caractérisé en ce que** la lèvre d'étanchéité (91) est déformée élastiquement par une surface opposée (86), se rétrécissant coniquement dans la direction d'insertion Y, de la paroi périphérique intérieure (71a) de la deuxième partie de boîtier (44), de manière à assurer une étanchéification en périphérie, et l'intervalle de fuite se forme par la pression interne du milieu sous pression régnant à l'intérieur lorsque la canalisation (2) n'est pas entièrement insérée par un retroussement de la lèvre d'étanchéité (91).

5. Dispositif de raccordement selon la revendication 4, **caractérisé en ce qu'**une rainure (92) ou des rainures (92) s'étendent, à l'encontre de la direction d'insertion Y, à l'intérieur de la paroi périphérique intérieure (71a) ou dans la surface opposée se rétrécissant coniquement (86) jusque dans la zone d'appui de la lèvre d'étanchéité (91), la profondeur de la rainure (92) se réduisant dans la direction de la lèvre d'étanchéité (91) .

6. Dispositif de raccordement selon l'une quelconque des revendications 1 à 5, **caractérisé en ce que** le joint d'étanchéité périphérique extérieur (82) est agencé dans une gorge annulaire (85) de la partie annulaire (71), la hauteur radiale de sa paroi de gorge arrière (87a) étant inférieure à la hauteur radiale de sa paroi de gorge avant (87), dans la direction d'insertion Y.

7. Dispositif de raccordement selon la revendication 6, **caractérisé en ce que** la hauteur radiale de la paroi de gorge arrière (87a) est mesurée de telle sorte que la paroi de gorge (87a) se termine au niveau de la lèvre d'étanchéité triangulaire (91).

8. Dispositif de raccordement selon la revendication 6 ou 7, **caractérisé en ce qu'**une deuxième chambre (82b) est agencée derrière la paroi de gorge arrière (87a) entre la paroi de gorge arrière (87a) et une paroi de chambre arrière (82c), la paroi de chambre (82c) présentant une hauteur radiale plus grande que la paroi de gorge avant (87) .

9. Dispositif de raccordement selon la revendication 8, **caractérisé en ce que** la paroi de chambre arrière (82c) présente un épaulement (93) au niveau de son côté détourné de la paroi de gorge arrière (87a), avant son extrémité de paroi extérieure radiale, qui présente une surface d'épaulement (93a) biaisée en direction de la paroi de gorge arrière (87a).
